# EUROPEAN PATENT APPLICATION

(11) **EP 0 968 652 A1**
(43) Date of publication of application: **05.01.2000**
(21) Application number: 98954817.7
(22) Date of filing: 24.11.1998
(51) Int. Cl.: A01N 65/00, A01N 37/40, A01M 17/00, B27K 3/34, B27K 3/50

(54) **WOOD PRESERVATIVE, ROT- AND INSECT-PROOFING SYSTEM, AND BAIT KIT**

(30) Priority: 25.11.1997 JP 32258297; 25.11.1997 JP 32291497; 25.11.1997 JP 32291597
(71) Applicant: Takeda Chemical Industries, Ltd., Osaka-shi, Osaka 541-0045 (JP)
(72) Inventor: YOSHIDA, Shinji, Osaka-shi, Osaka 559-0033 (JP); IGARASHI, Akira, Takarazuka-shi, Hyogo 665-0877 (JP); OGURA, Kou, Kawanishi-shi, Hyogo 666-0122 (JP)
(74) Representative: TER MEER STEINMEISTER & PARTNER GbR
(86) International application number: JP9805289
(87) International publication number: WO9926481

(57) **Abstract**

An insect pest control agent containing hiba oil as an active component has been known to be effective as a control agent for wood insect pests such as termites. But hiba neutral oil which is a residue obtained by removing acid oil containing hinokitiol from hiba oil had not been known to hava a control effect on wood insect pests such as termites. In the present invention, a medicine containing at least one kind of hiba neutral oil, hinoki oil, and parahydroxybenzoate as an active component is used as a wood preservative.

## Description

### Technical Field

The present invention relates to a wood preservative, a fungicide and insect repellent system, and a bait kit and, more particularly, to a wood preservative having activities such as an ingestion inhibiting action, a repellent action, and an insecticidal action on termites, powder post beatle and the like which attack buildings, furniture and the like made of wood, and also having an antibacterial and fungicidal action for protecting wood from fungi and mold, a fungicide and insect repellent system, and a bait kit for protecting houses from termites, powder post beatle and the like.

### Background Art

As control agents for wood insect pests including termites, powder post beatle and the like, organophosphorus insecticides such as phoxim and chloropyrifos, carbamate insecticides such as propoxur and bassa, and pyrethroid insecticides such as allethrin and permethrin, which are insecticides for popular use, can be exemplified.

Most of the above compounds have relatively low toxicity, but some of the organophosphorus or carbamate insecticides have a cholinesterase activity inhibiting action on the human body, while many of the pyrethroid insecticides have high fish-toxicity. It is hard to say that they are sufficiently safe from the viewpoint of environmental pollution. Many of these compounds are mixed with a synergist, octachlorodipropyl ether (hereinafter, referred to as S-421) in view of the problems such as durability of effects and efficiency to price so as to be sold at a market. The S-421 is an excellent synergist, but some have doubts about the use of the S-421, being a chlorine medicine, from the viewpoint of environmental pollution.

Recently, insect pest control agents and antibacterial and fungicidal agents which have higher safety to humans and animals and are more environmentally friendly, have been required. Hiba oil has been given attention as one of the agents satisfying the above requirements (Wonder of Aomori Hiba, Aomori Hiba Society Press, edit. Toshihiro Okabe et al. (1990). pp.132-143).

Hiba oil is separated into acid oil and neutral oil. The acid oil contains hinokitiol, while the neutral oil contains no hinokitiol. As described in the above reference, hinokitiol is regarded as the activity entity of various effects of hiba oil such as a fungicidal effect and an insecticidal effect. Accordingly, the neutral oil containing no hinokitiol is regarded as having no industrial usage in particular. Since hinoki oil extracted from a Japanese cypress also contains no hinokitiol, its use as phytoncide or perfume is being examined.

Parahydroxybenzoate has been so far used as a fungicide in foods, pharmaceuticals, or cosmetics, but its ingestion inhibiting action and repellent action on wood insect pests, and its antibacterial and fungicidal action on wood have not been known.

As soil treatment agents for wood insect pests including termites, powder post beatle and the like, the above-described organophosphorus insecticides such as phoxim and chloropyrifos, carbamate insecticides such as propoxur and bassa, and pyrethroid insecticides such as allethrin and permethrin, which are insecticides for popular use, can be exemplified.

As wood treatment agents, oils containing iodo, triazole, or thiazole fungicides, besides the above organophosphorus insecticides, carbamate insecticides, and pyrethroid insecticides, are exemplified.

As bait agents, Sentricon System (produced by Dow Elanco) containing hexaflumuron (IGR), First Line (produced by FMC) containing hydramethylnon and the like are known. Each of these medicines is placed on the outdoor ant trail mainly for the purpose of noxious insect extermination.

Most of the medicines contained in the above soil treatment agents and wood treatment agents have relatively low toxicity, but some of the organophosphorus or carbamate insecticides have a cholinesterase activity inhibiting action on the human body, while many of the pyrethroid insecticides have fish-toxicity. It is hard to say that they are sufficiently safe from the viewpoint of environmental pollution. Many of these medicines are also mixed with a synergist, octachlorodipropyl ether (hereinafter, referred to as S-421), in view of the problems such as durability of effects and efficiency to price so as to be sold at a market. As described above, the S-421 is an excellent synergist, but some have doubts about the use of the S-421, being a chlorine medicine, from the viewpoint of environmental pollution;

Recently, insect pest control agents which have higher safety to humans and animals and are more environmentally friendly, have been required.

The above soil treatment agents, wood treatment agents, and bait agents are regarded as being used separately, and there were no agents prepared in consideration of their total effect on the whole house.

As bait agents for termites, Sentricon System (produced by Dow Elanco) containing a hexaflumuron medicine. First Line (produced by FMC) containing a hydramethylnon medicine and the like have been known so far. Each of these bait agents is used mainly for the purpose of noxious insect extermination, which is placed outdoors.

However, the outdoors is wide, and little effect can be shown if it is not placed on the ant trail, leading to extremely low efficiency.

Recently, bait agents which have higher safety to humans and animals, are more environmentally friendly, and have excellent efficiency, have been required.

### Disclosure of Invention

The present invention has been developed in order to solve the above problems, and it is an object of the present invention to provide a wood preservative having an antibacterial and fungicidal action for protecting wood from fungi and mold, as well as activities such as an ingestion inhibiting action, a repellent action, and an insecticidal action on wood insect pests, which has extremely high safety to humans and animals and is more environmentally friendly.

In order to achieve the above object, a wood preservative (1) according to the present invention is characterized by containing at least one kind of hiba neutral oil, hinoki oil, and parahydroxybenzoate as an active component.

The wood preservative (1) contains at least one kind of hiba neutral oil, hinoki oil, and parahydroxybenzoate as an active component. Each of them individually has activities such as an ingestion inhibiting action and a repellent action on wood insect pests and also has an antibacterial and fungicidal action for protecting wood from fungi and mold. Hiba neutral oil and hinoki oil individually have a strong insecticidal action on wood insect pests. By using these hiba oil, hinoki oil, and parahydroxybenzoate in combination, the antibacterial and fungicidal action, ingestion inhibiting action, repellent action, insecticidal action and the like can be more excellently shown. And each of these substances has low toxicity to the human body and is environmentally friendly.

Hiba neutral oil is a residue obtained by removing acidic oil from hiba oil. Hinoki oil is obtained, for example, by steam distillation and extraction of sawdust powder of Japanese cypress scrap wood. Hiba neutral oil and hinoki oil were regarded as having no usage in particular so far, but it was first proved in the study of the present inventors that they have an insecticidal effect or the like equivalent to that of hiba oil, as well as an antibacterial and fungicidal action.

Parahydroxybeozoate has been so far used as a fungicide in foods, pharmaceuticals, or cosmetics, but its ingestion inhibiting action and repellent action on wood insect pests, and its antibacterial and fungicidal action on wood had not been known. It has been first proved in the study of the present inventors that parahydroxybenzoate also has an ingestion inhibiting action and a repellent action on wood insect pests, and an antibacterial and fungicidal action on wood.

A wood preservative (2) according to the present invention is characterized by containing boric acid and/or boron as an active component in the wood preservative (1).

When boric acid and/or boron are contained in the wood preservative (1), the activities such as the ingestion inhibiting action, repellent action, and insecticidal action on wood insect pests can be further increased, or the antibacterial and fungicidal action for protecting wood from fungi and mold can be further increased.

A wood preservative (3) according to the present invention is characterized by termites being target wood insect pests in the wood preservative (1) or (2).

The above hiba neutral oil, hinoki oil, parahydroxybenzoate, boric acid, and boron have particularly excellent activities such as a repellent action on termites.

It is another object of the present invention to provide a fungicide and insect repellent system which has extremely high safety to humans and animals and is environmentally friendly, as an ingestion inhibiting action, a repellent action, an insecticidal action and the like on wood insect pests are shown in total.

In order to achieve the above object, a fungicide and insect repellent system (1) according to the present invention is characterized in that the soil and wood portions are treated with medicine, and a bait agent is arranged between the portions which has been treated with medicine.

In the fungicide and insect repellent system (1) according to the present invention, the insect repellent system works all over the soil portion from which noxious insects such as termites creep out, the middle portion where the termites and the like having crept out from the soil portion creep up toward the wood portion, and the wood portion to be protected. Even if the termites and the like which successfully pass through the soil portion exist, many of them are checked by the bait agent arranged in the middle portion to be passed through next, and cannot easily find their way to the wood portion to be their destination. Even if they struggle to the wood portion, the noxious insects such as termites are inhibited from working since the wood portion is also treated with medicine.

Accordingly, in the fungicide and insect repellent system (1), even if the medicines used in each of the soil portion, the wood portion, and the middle portion between them have extremely high safety to humans and animals, and are environmentally friendly and mild so that each of them has a less insect repellent effect, an insect repellent system almost perfect in total can be formed.

A fungicide and insect repellent system (2) according to the present invention is characterized by a soil treatment agent containing at least one kind selected from fatty acid, fatty acid ester, plants containing insect pest control components, and their extracts as an active principle, which is a liquid medicine in the fungicide and insect repellent system (1).

The above fatty acid, fatty acid ester, plants containing insect pest control components, and their extracts are extremely safe to humans and animals and are environmentally friendly and mild among medicines, so that they can be sprinkled on the soil under the floor inside a house. And since the agent is a liquid medicine, it can be treated easily. Accordingly, in the fungicide and insect repellent system (2), a fungicide and insect repellent system which has extremely high safety and can be easily brought into operation can be provided, as an insect repellent system almost perfect in total can be formed.

A fungicide and insect repellent system (3) according to the present invention is characterized by a soil treatment agent containing at least one kind selected from fatty acid, fatty acid ester, plants containing insect pest control components, and their extracts as an active principle, which is a granule in the fungicide and insect repellent system (1).

In the fungicide and insect repellent system (3), besides the same effects as those in the fungicide and insect repellent system (2) being obtained, it is possible to keep the efficacy longer. The granule can be easily concentrated on the soil around the foundation or floor post footing portion under the floor, so that the system can be brought into operation effectively and economically.

A fungicide and insect repellent system (4) according to the present invention is characterized by a soil treatment agent containing at least one kind selected from fatty acid, fatty acid ester, plants containing insect pest control components, and their extracts as an active component, which is a microcapsule in the fungicide and insect repellent system (1).

In the fungicide and insect repellent system (4), besides the same effects as those in the fungicide and insect repellent system (3) being obtained, it is possible to keep the efficacy longer.

A fungicide and insect repellent system (5) according to the present invention is characterized by a wood treatment agent containing at least one kind selected from fatty acid, fatty acid ester, plants containing insect pest control components, and their extracts as an active component, which is a liquid medicine in the fungicide and insect repellent system (1).

The above fatty acid, fatty acid ester, plants containing insect pest control components, and their extracts are extremely safe to humans and animals and are environmentally friendly and mild among medicines, so that the wood under the floor inside a house or the wood inside a room also can be treated. And since the agent is a liquid medicine, it can be treated easily. Accordingly, in the fungicide and insect repellent system (5), a fungicide and insect repellent system which has extremely high safety and can be easily brought into operation can be provided, as an insect repellent system almost perfect in total can be formed.

A fungicide and insect repellent system (6) according to the present invention is characterized by a wood treatment agent containing boric acid as an active component, which is a liquid medicine in the fungicide and insect repellent system (1).

Since boric acid is water-soluble, water can be used as a solvent, and it has no odor, so that it can be sprinkled on the foundation concrete besides the wood portion. In the fungicide and insect repellent system (6), a fungicide and insect repellent system which has extremely high safety to humans and animals and is more environmentally friendly and mild can be provided.

A fungicide and insect repellent system (7) according to the present invention is characterized by a wood treatment agent containing at least one kind selected from fatty acid, fatty acid ester, plants containing insect pest control components, and their extracts as an active component, which is a liquid medicine in the fungicide and insect repellent system (6).

In the fungicide and insect repellent system (7), the efficacies of fatty acid, fatty acid ester, plants containing insect pest control components, and their extracts can be shown besides the efficacy of boric acid.

A fungicide and insect repellent system (8) according to the present invention is characterized by a bait agent containing at least one kind selected from IGR (Insect Growth Regulator), phenylpyrazole, neonicotinoid, and boric acid as an active component in the fungicide and insect repellent system (1).

In the fungicide and insect repellent system (8), by additionally laying a trap for the noxious insects having passed through the treated soil portion before they reach the wood portion, it is possible to check them from reaching the wood portion. And IGR, neonicotinoid, and boric acid have high safety to humans and animals, and are more environmentally friendly and mild. An insect repellent system almost perfect in total can be formed more safely.

A fungicide and insect repellent system (9) according to the present invention is characterized by a feed material of a bait agent including pulp in the fungicide and insect repellent system (8).

Termites and the like have a strong taste for pulp. When the pulp is included as a feed material, a large number of noxious insects gather around the bait agent, so that it is possible to make them eat the feed material efficiently. In the fungicide and insect repellent system (9), the reach rate of termites and the like to the wood can be remarkably reduced.

A fungicide and insect repellent system (10) according to the present invention is characterized by a bait agent to be attached to the foundation concrete portion and/or the floor post footing portion in the fungicide and insect repellent system (8) or (9).

Since the above bait agent used in the present invention has high safety to humans and animals, there is no problem even if it is placed indoors. The foundation concrete and floor post footing portions inside the house are the portions which termites and the like must pass through almost inevitably to reach the wood portion. In the fungicide and insect repellent system (10), by arranging the bait agent as described above, it is possible to make termites and the like eat the bait agent more efficiently.

A fungicide and insect repellent system (11) according to the present invention is characterized by a moisture regulator arranged under the floor in one of the fungicide and insect repellent systems (1) to (10).

In the fungicide and insect repellent system (11), since the moisture regulator is arranged under the floor, the fungicidal and insect repellent action can be increased more.

It is another object of the present invention to provide a bait kit by which houses can be efficiently protected from wood insect pests, and which has extremely high safety to humans and animals and are more environmentally friendly.

In order to achieve the above object, a bait kit (1) according to the present invention is characterized by a container holding a feed material therein and having an opening to be an entrance for noxious insects into the container formed on the side from which the noxious insects creep up, which is to be placed on the pathway of the noxious insects indoors.

Since the bait kit (1) according to the present invention is placed indoors, the pathway of the noxious insects is limited. Especially under floor corners and under floor portions of wet locations such as a bathroom, a toilet, and a kitchen tend to be their pathway. It is easy to arrange the container on the limited pathway, so that the noxious insects are allured by the above feed material and are certainly led into the above container through the above opening.

The bait kit (2) according to the present invention is characterized by a feed material including pulp in the bait kit (1).

Pulp is a feed material which wood insect pests, especially termites have a liking for. Many and many termites and the like are allured by the feed material so as to gather into the container.

The bait kit (3) according to the present invention is characterized by the pulp being a virgin pulp in the bait kit (2).

In the study of the present inventors, it has been made clear that termites like especially a virgin pulp among pulps. Therefore, when the virgin pulp is used as a feed material, noxious insects such as termites gather more certainly.

The bait kit (4) according to the present invention is characterized in that feed material treated with a medicine is not repellent to noxious insects in one of the bait kits (1) to (3).

By the use of the container and the feed material, the noxious insects can be inhibited from creeping upward from the container, but it is more desirable that the noxious insects being caused to gather by the feed material should be exterminated by a medicine. Therefore, it is desired that the feed material should be treated with a medicine which has extremely high safety to humans and animals and is environmentally friendly.

The bait kit (5) according to the present invention is characterized in that medicine is an IGR (Insect Growth Regulator) in the bait kit (4).

The IGR does not have an immediate effect on noxious insects, but has extremely high safety to humans and animals and is environmentally friendly.

The bait kit (6) according to the present invention is characterized in that medicine is boric acid in the bait kit (4).

Boric acid is water-soluble and is easily treated. It has a great insecticidal effect. And it has extremely high safety to humans and animals and is environmentally friendly.

The bait kit (7) according to the present invention is characterized in that medicine is a phenylpyrazole or neonicotinoid insecticide in the bait kit (4).

Since the phenylpyrazole or neonicotinoid insecticides are not repellent to noxious insects and have a great insecticidal effect, they are ideal as a medicine with which the feed material is saturated.

The bait kit (8) according to the present invention is characterized by the pathway which is the foundation portion and/or the floor post footing portion of a house in the bait kit (1).

The foundation portion and/or the floor post footing portion of a house are places where noxious insects having crept out from the soil must pass inevitably to reach the wood portion of the house. When the bait kit is placed on the pathway, the noxious insects can be captured almost certainly and efficiently.

The bait kit (9) according to the present invention is characterized by having an attachment with which the container is attached to the foundation portion and/or the floor post footing portion in the bait kit (8).

Since the bait kit (9) has an attachment with which the container is attached to the foundation portion and/or the floor post footing portion, the container can be easily attached to a desired place.

### Brief Description of Drawings

Fig. 1 is a diagrammatical sectional view showing a fungicide and insect repellent system according to an embodiment of the present invention:
Fig. 2 is a sectional view showing a state in which a bait kit according to an embodiment of the present invention is attached to the foundation portion of a house: and
Figs. 3(a) and 3(b) are perspective views partly in section showing a state in which a bait kit according to an embodiment of the present invention is attached to a corner of the foundation portion of a house.

### Best Mode for Carrying Out the Invention

Hiba neutral oil according to the present invention is a residue obtained by extracting and removing acid oil from hiba oil. The content of the hiba neutral oil in the medicine preferably ranges from 0.01 to 90 wt%.

Hinoki oil according to the present invention is an oil obtained by steam distillation and extraction of sawdust powder of Japanese cypress scrap wood, for example. The content of the hinoki oil in the medicine preferably ranges from 0.01 to 90 wt%.

As parahydroxybenzoate according to the present invention, n-propyl parahydroxybenzoate, n-butyl parahydroxybenzoate, ethyl parahydroxybenzoate. i-propyl parahydroxybenzoate and the like can be exemplified. The content of the parahydroxybenzoate in the medicine preferably ranges from 0.01 to 90 wt%, more preferably ranges from 0. 1 to 10 wt%.

As boric acid according to the present invention, metaboric acid, orthoboric acid, tetraboric acid and the like can be exemplified. The content of the boric acid in the medicine preferably ranges from 0.01 to 90 wt%.

Boron according to the present invention can be added in the form of sodium octaborate tetrahydrate, sodium borofluoride, an organoboron compound (Hi-boron ES-8300, Asahi Company System Tech Service) and the like, besides in the form of borax. The content of the boron in the medicine preferably ranges from 0.01 to 90 wt%.

The form of the medicine is not especially limited, as long as the components of the wood preservatives according to the present invention are included. As the forms, liquid medicines such as solution, water-dispersible powder, suspension, dispersant, emulsion, oil, and lotion: semi-solid medicines such as paste and cream; various kinds of granules, microcapsules, spray, aerosol and the like can be exemplified. These forms can be properly selected depending on the aim of the use or the applied parts. The medicines in these forms can be produced by well-known methods.

The wood preservative according to the present invention may contain insect repellents, fungicides, resins, solvents, other additives (e.g. stabilizers such as antioxidants and ultraviolet light absorbents, emulsifiers, coloring agents, and pigments) and the like depending on the forms of the medicines, as long as they do not inhibit the effects of the active components and safety of the wood preservative according to the present invention.

As the insect repellents, for example, organophosphorus insecticides such as phoxim, chloropyrifos, fenitrothion, pyridaphenthione, and isofenphos, pyrethroid insecticides such as cyflutbrin, permethrin, tralomethrin, fenvalerate, ethofenprox, and Hoe-498, nitroguanidine insecticides such as imidacloprid, nitromethylene insecticides, phenylpyrazole insecticides such as fipronil, insect repellents such as dibutyl succinate and diethyl toluamide, and effect reinforcing agents such as S-421 can be exemplified.

As the fungicides, for example, organic iodine fungicides such as 3-bromo-2,3-diiodo-2-propenyl ethyl carbonate, 3-iodo-2-propynyl butyl carbamate, 2,3,3-triiodoallyl alcohol, and parachlorophenyl-3-iodopropargylformal, benzimidazole and benzothiazole fungicides such as 2-(4-thiazolyl)benzimidazole and 2-thiocyanomethylthiobenzothiazole, and triazole fungicides such as 1-(2-(2',4'-dichlorophenyl)-1,3-dioxolan-2-yl-methyl)-1H-1,2,4-triazole, 1-(2-(2',4'-dichlorophenyl)-4-propyl-1,3-dioxolan-2-yl-methyl)-1H-1,2,4-triazole, and α-(2-(4-chlorophenyl)-ethyl)-α-(1, 1-dimethylethyl)-1H-1, 2, 4-triazole-1-ethanol can be exemplified.

As the resins, for example, alkyd resins, acrylic resins, fluororesins, and silicone resins can be exemplified.

As the solvents, for example, aliphatic organic solvents such as Exxon naphtha No. 7, Exxon naphtha No. 6, and Exxsol D80 (produced by Exxon chemicals) and aromatic organic solvents such as Solvesso 150, Solvesso 200 (produced by Exxon chemicals), Nisseki Hisol SAS 296, Nisseki Hisol SAS-LH, Alkene L (produced by Nippon Petro chemicals), PAD (produced by Nikko Petroleum), dibutyl phthalate, dioctyl phthalate and diallyl phthalate can be exemplified.

As the wood insect pests to be a target of the use of the wood preservative according to the present invention, for example, insects which belong to Isoptera, Coleoptera, and Hymenoptera can be exemplified.

As the insects which belong to Isoptera, for example, those belonging to Rhinotermitidae such as Reticulitormes speratus and Coptotermes formosanus, and those belonging to Kalotermitidae such as Cryptotermes domesticus can be exemplified.

As the insects which belong to Coleoptera, for example, those belonging to Lyctidae such as Lyctus brunneus, Lyctus linearis, Lyctus sinensis, and Lyctoxylon dentatum, those belonging to Anobiidae such as Nicobium hirtum, Ernobius mollis, Ptilineurus marmoratus, Pseudomesothes pulverulentus, and Scultotheca hilleri, those belonging to Bostrychidae such as Dinoderus minutus, Dinoderus japonicus, Rhizopertha dominica, and Heterobostrychus hamatipennis, those belonging to Cerambycidae such as Stromatium longicorne, those belonging to Rhynchophoridae such as Spalinus gigas, and those belonging to Scolytidae such as Xyleborus saxeseni can be exemplified. Besides them, those belonging to Buprestidae and Curculionidae can be exemplified.

As the insects which belong to Hymenoptera, for example, those belonging to Anthophoridae such as Xylocopa appendiculata circumvolans and those belonging to Formicidae such as Componotus obscuripes can be exemplified. The wood insect pest control according to the present invention shows an excellent control effect especially on termites among these insects.

As the fungi to be a target of the use of the wood preservative according to the present invention, for example, Basidiomycetes and the like can be exemplified.

As the fungi which belong to the Basidiomycetes, for example, Coriolus versicolor, Gloeophyllum saepiarium, Gloeophylluu trabeum, Lentinus lapideus, Serpula lacrymans, and Tyromyces palustris can be exemplified.

As the mold to be a target of the use of the wood preservative according to the present invention, for example, Zygomycetes, Ascomycetes, and Deuteromycetes can be exemplified.

As the mold belonging to Zygomycetes, for example, Rhizopus and Mucor can be exemplified.

As the mold belonging to Ascomycetes, for example, Chaetomium and Ceratocystis can be exemplified.

As the mold belonging to Deuteromycetes, for example, Trichoderma, Aureobasidium, Alternaria, Aspergillus, and Penicillium can be exemplified.

A control method of insect pests and mold using the wood preservative according to the present invention is described below. As described above, the wood preservative according to the present invention can be used in various forms. The wood preservative in various forms is needed to exist only enough to show its effect sufficiently in the entry or breeding place of noxious insects such as a kitchen, a bathroom, a living room, corners of floors, the under floor, the ceiling, pillars, walls, the foundation concrete portion, and the soil.

As the method, various methods depending on the entry or breeding place of wood insect pests such as applying (or painting), sprinkling, dipping, injecting, mixing, and spraying are exemplified. Here, when the wood preservative is made to exist in the soil, sprinkling onto the soil surface, sprinkling into a ditch formed on the soil, mixing with the soil and the like can be adopted.

Noxious insects can be effectively controlled not only by sprinkling or the like the wood preservative on a specific place as described above, but also by conducting applying (or painting), dipping, kneading or the like on a sheet-shaped base of a synthetic resin sheet, paper, cloth or the like so as to make the wood preservative adhere to or saturate it, and placing or sticking the sheet to which the wood preservative adheres on a point of entry or breeding of the wood insect pests.

When the wood preservative is used by the above-described method, a great repellent effect on the wood insect pests is recognized. Or after the wood insect pests work in the neighborhood of the place where the wood preservative exists for a given period of time or more, the wood insect pests cannot move, or die. The effect on termites is especially remarkable.

As described above, the wood preservative according to the present invention has activities such as an ingestion inhibiting action, a repellent action and an insecticidal action on wood insect pests such as termites and powder post beatle.

The wood preservative according to the present invention, which can protect wood from fungi and mold, has an antibacterial and fungicidal effect.

An embodiment of the fungicide and insect repellent system according to the present invention is described below.

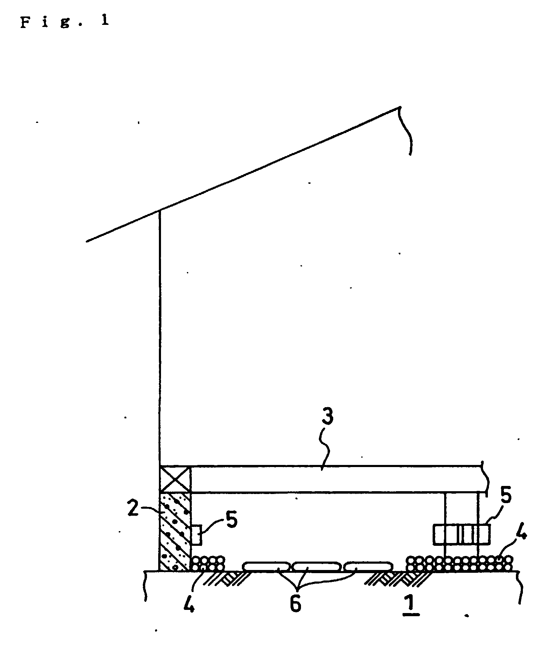

Fig. 1 is a diagrammatical sectional view of a house showing a fungicide and insect repellent system according to the embodiment. The foundation concrete portion 2 is partly buried in the soil 1 so as to stand, on the top of which a base wood portion 3 is mounted. Granules of a soil treatment agent 4 are arranged around the foundation concrete portion 2 on the surface of the soil 1. In the middle portion of the foundation concrete portion 2 in the height direction, a container 5 on the lower side of which an opening (not shown) to be an entrance for noxious insects is formed is arranged. The container 5 is filled with a bait agent. The base wood portion 3 is treated with medicine and moisture regulators 6 are arranged on the surface of the soil 1 under the floor. The soil treatment agent 4, bait agent, medicine treatment on the base wood portion 3, and moisture regulator 6 act on noxious insects in total.

Noxious insects which creep out from the soil 1 are inhibited from working first by the soil treatment agent 4. Even if they successfully pass through the portion where the soil treatment agent 4 is arranged, they must creep up on the foundation concrete portion 2 so as to reach the base wood portion 3. Since the container 5 is attached to the foundation concrete portion 2 and is filled with the bait agent, they are allured with the bait agent. It is extremely difficult to successfully pass aside the container 5 and reach the base wood portion 3. Even if they reach the base wood portion 3, the base wood portion 3 is treated with medicine, so that it is difficult to eat the base wood portion 3, Thus in the fungicide and insect repellent system according to the embodiment, the soil treatment agent 4, bait agent, medicine treatment on the base wood portion 3, and moisture regulator 6 act on the noxious insects in total, so that the house can be almost perfectly protected from the noxious insects.

The soil treatment agent 4 according to the fungicide and insect repellent system in the present invention is extremely safe to humans and animals. As the soil treatment agent 4, for example, fatty acid and/or fatty acid ester are used. These substances have such high safety that they are used as a food additive or a base of cosmetics.

The fatty acid may have a straight chain structure or a branching structure. As preferred examples of the fatty acid, carboxylic acids such as caproic acid, heptanoic acid, caprylic acid, nonanoic acid, capric acid, and lauric acid, and unsaturated fatty acids such as sorbic acid are exemplified. The carbon number of the carboxylic acids is preferably 8 to 18. These fatty acids may be used alone or two or more kinds of them may be used at the same time. The content of the fatty acid in the medicine preferably ranges from 0.01 to 90 wt%.

As the fatty acid ester, fatty acid esters having the total carbon number of 8 to 25 are preferable. The fatty acid esters preferably comprise an alcohol residue having the carbon number of 1 to 18 and an aliphatic carboxylic acid residue having the carbon number of 1 to 18. As the examples, allyl pentanoate, allyl caproate, allyl heptamoate, allyl caprylate, allyl nonanoate, allyl caprate, methyl nonanoate, ethyl nonanoate, ethyl caprate, butyl caprate, heptyl caprate, decyl caprate, methyl laurate, ethyl laurate, allyl laurate, propyl laurate, butyl laurate, amyl laurate, methyl myristate, ethyl myristate, propyl myristate, allyl myristate, butyl myristate, methyl palmitate, ethyl palmitate, propyl palmitate, allyl palmitate, butyl palmitate, butyl stearate, methyl oleate, ethyl oleate, butyl oleate, and octadecyl acetate can be exemplified. These fatty acid esters may be used alone, or two or more kinds of them may be used at the same time. The fatty acids and the fatty acid esters may be used at the same time.

The content of the fatty acid ester in the medicine when it is used as an active component is preferably 0.1 to 90 wt%, and more preferably 1 to 80 wt%. When the fatty acid and the fatty acid ester are used in combination, each content of them may be chosen depending on the proportions of the components.

As the plants containing insect pest control components, plants belonging to Moringa, Marah, Momordica, Sophora, Maackia, Tinospora, Zantoxylum, Picrasma, Piper, Strychnos, Styrax, Liquidambar and the like can be exemplified. The extracts of these plants using water and/or a hydrophilic solvent can be used. Hiba oil and hinoki oil also can be exemplified as the extracts of plants.

The form of the medicine is not especially limited, as long as the components of the soil treatment agent according to the present invention are included. As the form, liquid medicines such as solution, water-dispersible powder, suspension, dispersant, emulsion, oil, and lotion: semi-solid medicines such as paste and cream: various kinds of granules, microcapsules, spray, aerosol and the like can be exemplified. But when the durability is taken into consideration, granules are more preferable than liquid medicines, and microcapsules are more preferable than granules. The medicines in these forms can be produced by well-known methods.

When these soil treatment agents are used, the methods such as sprinkling on the soil surface, sprinkling into a ditch formed on the soil, and mixing with the soil can be adopted. Noxious insects can be effectively controlled not only by sprinkling or the like on a specific place as described above, but also by conducting applying (or painting), dipping, kneading or the like on a sheet-shaped base of a synthetic resin sheet, paper, cloth or the like so as to make the soil treatment agent adhere to or saturate it, and placing or sticking the sheet to which the soil treatment agent adheres on a point of entry or breeding of the wood insect pests.

As the wood treatment agent, the fatty acid, fatty acid ester, plants containing insect pest control components and their extracts, and boric acid are desirably contained as an active component. Boric acid is water-soluble and has extremely high safety and no odor, leading to an easy treatment on the wood portion.

The wood treatment agent according to the present invention may contain insect repellents, fungicides, resins, solvents, other additives (e.g. stabilizers such as antioxidants and ultraviolet light absorbents, emulsifiers, coloring agents, and pigments) and the like depending on the kinds of the treatment agents, as long as they do not inhibit the effects of the active components and safety of the wood treatment agent according to the present invention.

As the insect repellents, fungicides, resins and solvents, the same as described above can be used.

Wood insect pests to be a target of the use of the wood treatment agent according to the present invention are the same as described above. The wood treatment agent according to the present invention has an excellent control effect especially on termites among those insects.

A method for using the wood treatment agent is described.

The wood treatment agent can be used in various forms. The wood treatment agent in various forms is needed to exist only enough to show its effect sufficiently in the entry or breeding place of noxious insects such as the wood portion of a kitchen, a bathroom, a living room, corners of floors, the under floor, the ceiling, pillars, walls or the like. As the method, various kinds of methods depending on the entry or breeding place of wood insect pests such as applying (or painting), sprinkling, dipping, injecting, and spraying are exemplified.

Not only by sprinkling or the like on a specific place as described above, but also by conducting applying (or painting), dipping, kneading or the like on a sheet-shaped base of a synthetic resin sheet, paper, cloth or the like so as to make the wood treatment agent adhere to or saturate it, and placing or sticking the sheet to which the wood treatment agent adheres on a point of entry or breeding of wood insect pests, the insect pests can be controlled effectively.

When the wood treatment agent is used by the above-described method, a great repellent effect on the wood insect pests is recognized. Or after the wood insect pests work in the neighborhood of the place where the wood treatment agent exists for a given period of time or more, the wood insect pests cannot move, or die. The effect on termites is especially remarkable.

As described above, the wood treatment agent has activities such as an ingestion inhibiting action, a repellent action, and an insecticidal action on wood insect pests such as termites and powder post beatle.

In the middle portion between the soil treatment agent and the wood treatment agent, a bait agent is arranged. It is desired that the bait agent should be arranged on the foundation concrete portion or the floor post footing portion. The bait agent is placed indoors where the effect is shown better, not placed outdoors where the effect is shown less, differently from the conventional bait agent. Various kinds of methods for placing it can be considered. The bait agent is put into a container, which may be attached to the foundation concrete portion or the floor post footing portion. Or the bait agent in the form of granules may be directly scattered on the floor post footing.

As the bait agent, agents containing at least one kind selected from IGR, boric acid, nereistoxin insecticides such as bensultap, phenylpyrazole insecticides such as fipronil, neonicotinoid insecticides such as imidacloprid and nitenpyram as an active component are desirable. The IGR is an insect growth regulator, for example, a medicine which inhibits the synthesis of chitin forming the epidermis of insects so as to make the insects fail their ecdyses, or a Juvenile Hormone Analog. As the IGR, chitin synthesis inhibitors such as lufenuron (produced by Novartis), hexaflumuron (produced by Dow), diflubenzuron (produced by Dafa), and flufenoxuron (produced by Shell), and juvenile hormone mimics such as methoprene and hydroprene (both produced by Zoecon) can be exemplified.

The materials called boric acids are metaboric acid, orthoboric acid, tetraboric acid and the like. Whichever is used, there is no problem. Or there is no problem about using even a mineral called borax.

When the bait agents are put into the container 5, it is desired that pulp (including both a chemical pulp and a mechanical pulp) should be impregnated with the agents in the form of liquid. As the feed material, especially a virgin pulp among pulps is favorable. The feed material and the bait agent may be mixed or they may be kept in the form of two layers in the container. Even if only the pulp is put into the container without using the IGR or boric acid and the container is placed on the pathway of noxious insects, the reach of the noxious insects to the wood portion can be noticeably inhibited. In this case, the pulp functions as a bait agent.

An embodiment of a bait kit according to the present invention is described below by reference to the drawings.

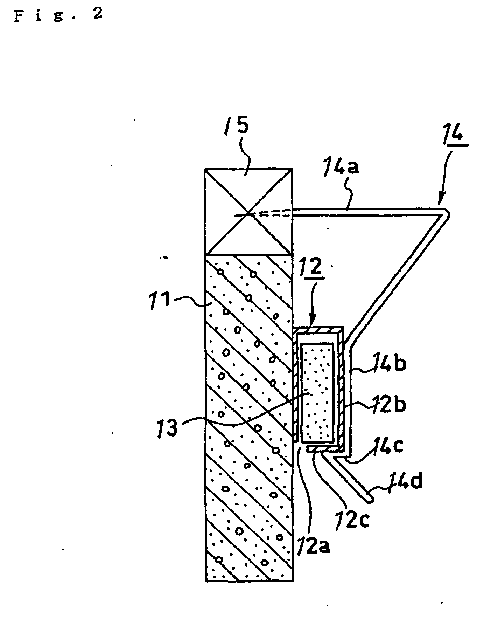

Fig. 2 shows a state in which a bait kit according to the embodiment is attached to the middle portion in the height direction of the foundation concrete portion 11 of a house. Inside a container 12, a feed material 13 is kept. The container 12 has a shape of a hollow quadrangular prism, a hollow triangular prism or the like, and is made of plastics, metal, glass, or pottery. On the lower side thereof closer to the foundation concrete portion 11, an opening 12a to be an entrance to the container 12 for noxious insects is formed. Attaching the container 12 to the foundation concrete portion 11 is conducted using an attachment 14 or adhesives. The attachment 14 is thread-shaped, and is made of metal, plastics or the like which has elasticity. It has a striking portion 14a, a pressing portion 14b, a supporting portion 14c, and a lifting portion 14d, and is bent at four points. On the top side of the foundation concrete portion 11, a base wood portion 15 is generally mounted. The striking portion 14a of the attachment 14 is to be striken into the base wood portion 15. The container 12 is stably fixed to the foundation concrete portion 11 with the side face 12a being elastically pressed down by the pressing portion 14b and the bottom face 12c being supported by the supporting portion 14c. The container 12 is preferably arranged continuously along the length direction of the foundation concrete portion 11, but it is not necessary to be arranged continuously. It may be arranged intermittently.

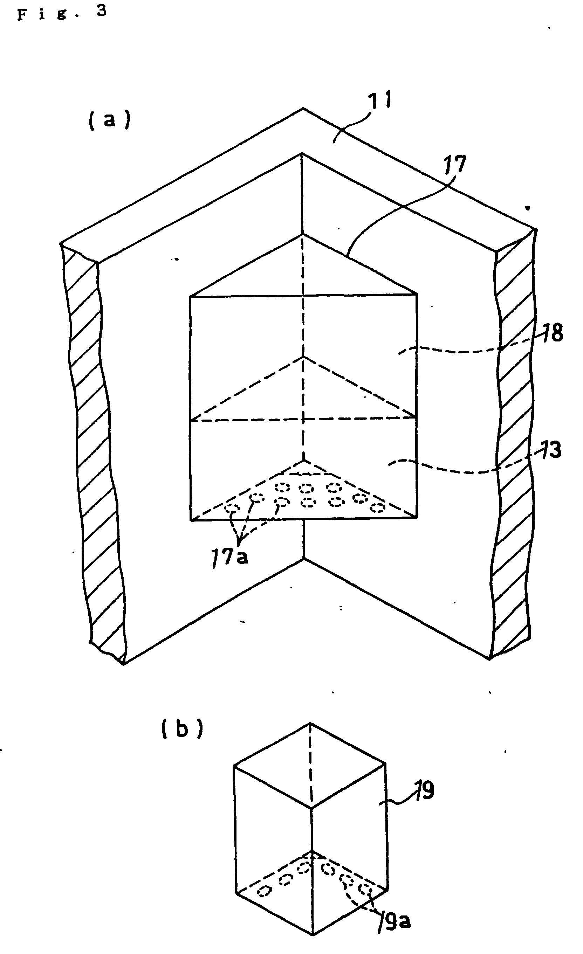

Figs. 3(a) and 3(b) show the examples wherein the container is arranged intermittently. Fig. 3(a) shows a state in which a hollow triangular prism-shaped container 17 holding a feed material 13 and a bait agent 18 therein is fitted to a corner of the foundation concrete portion 11 with adhesives. On the bottom thereof, an opening 17a is formed.

Fig. 3(b) shows the case of a container 19 having a shape of a hollow quadrangular prism, and on the bottom thereof, an opening 19a is formed.

In Fig. 2, the case wherein the container 12 is fixed to the foundation concrete portion 11 is shown, but the place to which the container 12 is fixed is not limited to the foundation concrete portion 11. It may be fixed to the other places where noxious insects pass through, and as the other places, a floor post footing portion can be exemplified.

In Fig. 3, the cases wherein the container 17 or 19 is fitted to a corner of the foundation concrete portion 11 are shown. But when the efficiency is taken into consideration, it is desired that the containers 12, and 17 or 19 should be placed on the other places, for example, under floor portions of wet locations such as a bathroom, a toilet, and a kitchen, which tend to be a pathway of noxious insects.

As the feed material 13, feed materials which a large number of noxious insects gather around and like to eat are desirable. Pulps such as a chemical pulp and a mechanical pulp, those pulps to which a paper force reinforcing agent or aluminium sulfate is added, sawdust and the like can be exemplified. Among the pulps, especially a virgin pulp show an especially excellent effect.

As the paper force reinforcing agent, polyacrylamide, carboxymethyl cellulose, polyethyleneimizo, and starch can be exemplified.

Processed goods such as corrugated fiberboard, nonwoven fabric, and paper using a virgin pulp as a base may be used as a carrier of the feed material 13 and the bait agent 18.

Since nothing can be better than exterminating the noxious insects being caused to gather by the feed material 13, it is desired that the feed material 13 should be treated with medicine. The medicine used in the medicine treatment needs to have no evil effect on humans and animals, and IGR can be exemplified. As examples of the IGR, a chitin synthesis inhibitor such as lufenuron, hexaflumuron. diflubenzuron, and flufenoxuron, and juvenile hormone mimics such as methoprene and hydroprene can be exemplified.

As the other medicines, boric acid having extremely high safety, and nereistoxin insecticides such as bensultap, phenylpyrazole insecticides such as fipronil, neonicotinoid insecticides such as imidacloprid and nitenpyram which are not repellent to noxious insects can be exemplified.

In order to place the bait kit having the above construction indoors, the container 12 is supported with the attachment 14 in the state in which the container 12 is pressed down to a desired place on the foundation concrete portion 11. Only by striking the striking portion 14a into the base wood portion 15, the bait kit can be easily attached. When the container 12 is detached from the foundation concrete portion 11 in order to replace the feed material 13 set inside the container 12, by lifting the lifting portion 14d by hand in the use of the elasticity of the attachment 14, the container 12 can be easily detached from the attachment 14.

As the target noxious insects of the use of the bait kit according to the present invention, the above insects belonging to Isoptera, Coleoptera, and Hymenoptera can be exemplified. The bait kit according to the present invention shows an excellent control effect especially on termites among these insects.

When the above-described bait kit is used, the above noxious insects can be inhibited from reaching the wood portion indoors. When the feed material 13 is treated with medicine, the noxious insects cannot move, or die after eating the feed material 13. The above effect on termites is especially remarkable.

As described above, the bait kit according to the present invention shows activities such as a reach-to-wood inhibiting action and an insecticidal action on wood insect pests such as termites and powder post beatle.

### Examples

The present invention is described below in more detail by reference to Examples, but the present invention is not limited to these Examples. As Comparative Examples, sample solutions containing hinokitiol or hiba oil were prepared and the same tests as in Examples were conducted.

### Preparation of sample solutions (Examples and Comparative Examples)

The sample solutions were obtained by adding hiba neutral oil and hinoki oil to n-hexane as wood preservatives according to Examples so that they were 10 wt% to n-hexane. In the Examples shown in Table 2 wherein parahydroxybenzoate, and boric acid or borax were contained, ethanol was used as a solvent. The sample solutions were obtained by adding them to ethanol so that they were 10 wt% to ethanol. The sample solutions containing hinokitiol or hiba oil according to Comparative Examples were prepared by adding them to n-hexane so that they were 10 wt% to n-hexane in the same manner as in Examples.

### Test 1

Test quartz sand was prepared by drying quartz sand which was made to pass through a 20-mesh sieve until it had a constant weight at a temperature of 60 ± 2 °C, and cooling it. Each of the above sample solutions was adhered uniformly to the surface of the quartz sand of 12 g so that the quantity of each sample was 1 wt% to the quartz sand. After volatilizing the solvent (n-hexane), moisture was further adhered to the quartz sand so that each moisture content was 10 wt% to the dry quartz sand. As Comparative Examples, quartz sand which was not treated with medicine and moisture was adhered to in the same manner as in the above cases was also prepared.

Two bottomed cylindrical glass containers (inner diameter of 5 cm and height of about 12 cm) having a grinding portion for connecting with a glass tube at a point 2 cm away from the open side end were prepared. In addition, a glass tube (inner diameter of 1.5 cm and height of about 10 cm) which could make those two glass containers connect and communicate was prepared. The glass containers and the glass pipe were previously dry sterilized. The test quartz sand of about 60 g to which no medicine or the like was adhered filled in one of the glass containers, while the other container was filled with Japanese red pine chips of about 3 g as a feed. The center portion of the glass tube was filled with the quartz sand treated with the sample solutions according to the Examples and Comparative Examples, or the quartz sand which was not treated with medicine, and using the glass tube, the two glass containers were connected. Onto the test quartz sand in the container filled with the test quartz sand to which no medicine or the like was adhered, 200 ergates and 20 dinergates of Coptotermes formosanus which were collected from a formicary were put, and the test unit was left in a thermostatic chamber of a temperature of 28 ± 2 °C and a humidity of 70% or more for 3 weeks.

3 weeks later, whether Coptotermes formosanus in the glass container filled with the test quartz sand passed through the glass tube and moved into the other glass container filled with Japanese red pine chips or not was observed. Here, the test was repeated three times on each sample.

As a result, in the tests wherein the quartz sands treated with the sample solutions according to the Examples and Comparative Examples were used, the movement of Coptotermes formosanus was not observed at all. On the other hand, in the cases wherein the glass tube was filled with the quartz sand which was not treated with medicine according to the Comparative Example, Coptotermes formosanus moved in the glass tube and reached the glass container filled with Japanese red pine chips. Thus, the quartz sands to which the sample solutions according to the Examples and Comparative Examples were adhered had a strong repellent effect on Coptotermes formosanus.

### Test 2

As another test, each of the quartz sands treated in the same manner as in Test 1 and the quartz sand which was not treated was spread all over the previously dry sterilized laboratory dish (diameter of 6 cm). 10 ergates of Coptotermes formosanus collected from a formicary were put on each of these quartz sands at random. Then, each laboratory dish was put in a vessel containing water. The vessel was under static conditions in a thermostatic chamber of a temperature of 28 ± 2 °C for 7 days. The health conditions of Coptotermes formosanus were observed 4 hours later, one day later, and 7 days later. The results are shown in Tables 1 and 2.

**Table 1**

| | Compound | | | |
|---|---|---|---|---|
| Example 1 | Hiba neutral oil 1% | 4 hours later | Number of healthy ants | 9 |
| | | | Number of fallen ants | 1 |
| | | | Number of dead ants | 0 |
| | | 1 day later | Number of healthy ants | 0 |
| | | | Number of fallen ants | 0 |
| | | | Number of dead ants | 10 |
| | | 7 days later | Number of healthy ants | - |
| | | | Number of fallen ants | - |
| | | | Number of dead ants | - |
| Example 2 | Hinoki oil 1% | 4 hours later | Number of healthy ants | 9 |
| | | | Number of fallen ants | 1 |
| | | | Number of dead ants | 0 |
| | | 1 day later | Number of healthy ants | 0 |
| | | | Number of fallen ants | 0 |
| | | | Number of dead ants | 10 |
| | | 7 days later | Number of healthy ants | - |
| | | | Number of fallen ants | - |
| | | | Number of dead ants | - |
| Comparative Example 1 | Hinokitiol 0.05% | 4 hours later | Number of healthy ants | 10 |
| | | | Number of fallen ants | 0 |
| | | | Number of dead ants | 0 |
| | | 1 day later | Number of healthy ants | 9 |
| | | | Number of fallen ants | 1 |
| | | | Number of dead ants | 0 |
| | | 7 days later | Number of healthy ants | 3 |
| | | | Number of fallen ants | 3 |
| | | | Number of dead ants | 4 |
| Comparative Example 2 | Hiba oil 1% | 4 hours later | Number of healthy ants | 9 |
| | | | Number of fallen ants | 1 |
| | | | Number of dead ants | 0 |
| | | 1 day later | Number of healthy ants | 0 |
| | | | Number of fallen ants | 0 |
| | | | Number of dead ants | 10 |
| | | 7 days later | Number of healthy ants | - |
| | | | Number of fallen ants | - |
| | | | Number of dead ants | - |
| Comparative Example 3 | Not treated | 4 hours later | Number of healthy ants | 10 |
| | | | Number of fallen ants | 0 |
| | | | Number of dead ants | 0 |
| | | 1 day later | Number of healthy ants | 10 |
| | | | Number of fallen ants | 0 |
| | | | Number of dead ants | 0 |
| | | 7 days later | Number of healthy ants | 10 |
| | | | Number of fallen ants | 0 |
| | | | Number of dead ants | 0 |

**Table 2**

| | Compound | | | |
|---|---|---|---|---|
| Example 3 | Hiba neutral oil + hinoki oil (0.5% + 0.5%) | 4 hours later | Number of healthy ants | 7 |
| | | | Number of fallen ants | 3 |
| | | | Number of dead ants | 0 |
| | | 1 day later | Number of healthy ants | 0 |
| | | | Number of fallen ants | 0 |
| | | | Number of dead ants | 10 |
| | | 7 days later | Number of healthy ants | - |
| | | | Number of fallen ants | - |
| | | | Number of dead ants | - |
| Example 4 | Hiba neutral oil + hinoki oil + n-butyl parahydroxybenzoate (0.4% + 0.4% + 0.2%) | 4 hours later | Number of healthy ants | 7 |
| | | | Number of fallen ants | 3 |
| | | | Number of dead ants | 0 |
| | | 1 day later | Number of healthy ants | 0 |
| | | | Number of fallen ants | 0 |
| | | | Number of dead ants | 10 |
| | | 7 days later | Number of healthy ants | - |
| | | | Number of fallen ants | - |
| | | | Number of dead ants | - |
| Example 5 | Hiba neutral oil + hinoki oil + n-propyl parahydroxybenzoate (0.4% + 0.4% + 0.2%) | 4 hours later | Number of healthy ants | 7 |
| | | | Number of fallen ants | 3 |
| | | | Number of dead ants | 0 |
| | | 1 day later | Number of healthy ants | 0 |
| | | | Number of fallen ants | 0 |
| | | | Number of dead ants | 10 |
| | | 7 days later | Number of healthy ants | - |
| | | | Number of fallen ants | - |
| | | | Number of dead ants | - |
| Example 6 | Hiba neutral oil + n-butyl parahydroxybenzoate (0.5% + 0.5%) | 4 hours later | Number of healthy ants | 8 |
| | | | Number of fallen ants | 2 |
| | | | Number of dead ants | 0 |
| | | 1 day later | Number of healthy ants | 0 |
| | | | Number of fallen ants | 0 |
| | | | Number of dead ants | 10 |
| | | 7 days later | Number of healthy ants | - |
| | | | Number of fallen ants | - |
| | | | Number of dead ants | - |
| Example 7 | Hiba neutral oil + n-propyl parahydroxybenzoate (0.5% + 0.5%) | 4 hours later | Number of healthy ants | 8 |
| | | | Number of fallen ants | 2 |
| | | | Number of dead ants | 0 |
| | | 1 day later | Number of healthy ants | 0 |
| | | | Number of fallen ants | 0 |
| | | | Number of dead ants | 10 |
| | | 7 days later | Number of healthy ants | - |
| | | | Number of fallen ants | - |
| | | | Number of dead ants | - |

**Table 3**

| | Compound | | | |
|---|---|---|---|---|
| Example 8 | Hinoki oil + n-butyl parahydroxybenzoate (0.5% + 0.5%) | 4 hours later | Number of healthy ants | 8 |
| | | | Number of fallen ants | 2 |
| | | | Number of dead ants | 0 |
| | | 1 day later | Number of healthy ants | 0 |
| | | | Number of fallen ants | 0 |
| | | | Number of dead ants | 10 |
| | | 7 days later | Number of healthy ants | - |
| | | | Number of fallen ants | - |
| | | | Number of dead ants | - |
| Example 9 | Hinoki oil + n-propyl parahydroxybeozoate (0.5% + 0.5%) | 4 hours later | Number of healthy ants | 8 |
| | | | Number of fallen ants | 2 |
| | | | Number of dead ants | 0 |
| | | 1 day later | Number of healthy ants | 0 |
| | | | Number of fallen ants | 0 |
| | | | Number of dead ants | 10 |
| | | 7 days later | Number of healthy ants | - |
| | | | Number of fallen ants | - |
| | | | Number of dead ants | - |
| Example 10 | n-butyl parahydroxybenzoate + boric acid (0.5% + 0.5%) | 4 hours later | Number of healthy ants | 10 |
| | | | Number of fallen ants | 0 |
| | | | Number of dead ants | 0 |
| | | 1 day later | Number of healthy ants | 9 |
| | | | Number of fallen ants | 1 |
| | | | Number of dead ants | 0 |
| | | 7 days later | Number of healthy ants | 0 |
| | | | Number of fallen ants | 0 |
| | | | Number of dead ants | 10 |
| Example 11 | n-butyl parahydroxybenzoate + borax (0.5% + 0.5%) | 4 hours later | Number of healthy ants | 10 |
| | | | Number of fallen ants | 0 |
| | | | Number of dead ants | 0 |
| | | 1 day later | Number of healthy ants | 10 |
| | | | Number of fallen ants | 0 |
| | | | Number of dead ants | 0 |
| | | 7 days later | Number of healthy ants | 7 |
| | | | Number of fallen ants | 0 |
| | | | Number of dead ants | 3 |

**Table 4**

| | Compound | | | |
|---|---|---|---|---|
| Example 12 | n-propyl parahydroxybenzoate + boric acid (0.5% + 0.5%) | 4 hours later | Number of healthy ants | 10 |
| | | | Number of fallen ants | 0 |
| | | | Number of dead ants | 0 |
| | | 1 day later | Number of healthy ants | 9 |
| | | | Number of fallen ants | 1 |
| | | | Number of dead ants | 0 |
| | | 7 days later | Number of healthy ants | 0 |
| | | | Number of fallen ants | 0 |
| | | | Number of dead ants | 10 |
| Example 13 | n-propyl parahydroxybenzoate + borax (0.5% + 0.5%) | 4 hours later | Number of healthy ants | 10 |
| | | | Number of fallen ants | 0 |
| | | | Number of dead ants | 0 |
| | | 1 day later | Number of healthy ants | 10 |
| | | | Number of fallen ants | 0 |
| | | | Number of dead ants | 0 |
| | | 7 days later | Number of healthy ants | 8 |
| | | | Number of fallen ants | 1 |
| | | | Number of dead ants | 1 |
| Example 14 | n-butyl parahydroxybenzoate (1.0%) | 4 hours later | Number of healthy ants | 10 |
| | | | Number of fallen ants | 0 |
| | | | Number of dead ants | 0 |
| | | 1 day later | Number of healthy ants | 10 |
| | | | Number of fallen ants | 0 |
| | | | Number of dead ants | 0 |
| | | 7 days later | Number of healthy ants | 10 |
| | | | Number of fallen ants | 0 |
| | | | Number of dead ants | 0 |
| Example 15 | n-propyl parahydroxybenzoate (1.0%) | 4 hours later | Number of healthy ants | 10 |
| | | | Number of fallen ants | 0 |
| | | | Number of dead ants | 0 |
| | | 1 day later | Number of healthy ants | 10 |
| | | | Number of fallen ants | 0 |
| | | | Number of dead ants | 0 |
| | | 7 days later | Number of healthy ants | 10 |
| | | | Number of fallen ants | 0 |
| | | | Number of dead ants | 0 |

As obvious from the results in Tables 1 and 2, in the cases wherein the quartz sands treated with the sample solutions according to Examples 1 to 10 and 12 (solutions containing at least one kind of hiba neurtal oil, hinoki oil, and boric acid as an active principle) were used, all the ants of Coptotermes formosanus were dead 7 days later. It was proved that the sample solutions containing at least one kind of the above hiba neurtal oil, hinoki oil, and boric acid as an active component have not only a repellent effect but also an effect of killing Coptotermes formosanus or inhibiting its normal activity.

On the other hand, in the case wherein the quartz sand treated with the sample solution according to the Comparative Example 2 (a solution containing hiba oil) was used, all the ants of Coptotermes formosanus were dead one day later. It was ascertained that the sample solution containing hiba oil according to the Comparative Example 2 also has an effect as a control agent. In the case wherein the quartz sand treated with the sample solution according to the Comparative Example 1 (a solution containing hinokitiol) was used, all the ants of Coptotermes formosanus were alive one day later, but 4 ants were dead and 3 ants were fallen 7 days later. It was ascertained that the sample solution containing hinokitiol according to the Comparative Example 1 has an effect as a control agent to some extent.

In the cases wherein the quartz sands treated with the sample solutions containing none of hiba neurtal oil, hinoki oil, and boric acid according to the Examples 11 and 13 to 15 were used, it was ascertained in the Test 1 that the sample solutions have a strong repellent effect, but it was ascertained in the Test 2 that the sample solutions have a weak effect as a control agent.

In the case wherein the quartz sand treated with no sample solutions according to the Comparative Example 3 was used, all the ants of Coptotermes formosanus were in a healthy condition even 7 days later.

### Test 3

The fungicidal effect tests were conducted based on the Japan Wood Preservation Association Standards No. 1 revision in 1989. The test results were shown by weight decrease rates of treated test pieces in the antibacterial operation. Tyromyces and Coriolus were used as test fungi, and the weathering operation was conducted five times. The results are shown in Table 3.

**Table 5**

| | | Weight decrease rate (%) | |
|---|---|---|---|
| | Compound \ Fungus | Tyromyces | Coriolus |
| Comparative Example 4 | Hiba oil (2%) | 8.5 | 8.7 |
| Comparative Example 5 | Hinokitiol (0.1%) | 5.2 | 5.3 |
| Example 16 | Hiba neutral oil (2%) | 13.5 | 14.2 |
| Example 17 | Hinoki oil (2%) | 11.0 | 11.3 |
| Example 18 | n-butyl parahydroxybenzonate (2.0%) | 2.7 | 2. 7 |
| Example 19 | n-propyl parahydroxybenzonate (2.0%) | 2.8 | 2.9 |
| Example 20 | Hiba neutral oil + n-butyl parahydroxybenzonate (0.5% + 1.5%) | 2.7 | 3.0 |
| Example 21 | Hiba neutral oil + n-propyl parahydroxybenzonate (0.5% + 1.5%) | 2.8 | 3.0 |
| Example 22 | Hinoki oil + n-butyl parahydroxybenzonate (0.5% + 1.5%) | 2.6 | 2.8 |
| Example 23 | Hinoki oil + n-propyl parahydroxybenzonate (0.5% + 1.5%) | 2.8 | 3.0 |
| Example 24 | Hiba neutral oil + hinoki oil + n-butyl parahydroxybenzonate (0.5% + 0.5% + 1.0%) | 3.1 | 3.3 |
| Example 25 | Hiba neutral oil + hinoki oil + n-propyl parahydroxybenzonate (0.5% + 0.5% + 1.0%) | 3.3 | 3.4 |
| Example 26 | n-butyl parahydroxybenzonate + boric acid + borax (1.0% + 1.0% + 1.0%) | 2.3 | 2.2 |
| Example 27 | n-propyl parahydroxybenzonate + boric acid + borax (1.0% + 1.0% + 1.0%) | 2.6 | 2.7 |
| Comparative Example 6 | Not treated | 33.6 | 27.9 |

It was ascertained that each test piece treated with the sample solutions containing at least one kind of hiba neutral oil, hinoki oil, parahydroxybenzoate, boric acid, and boron as an active component according to the Examples has a fungicidal effect, but since the test piece which was not treated with any sample solutions had a large weight decrease rate, its fungicidal effect could not be ascertained.

The bait kit according to the present invention is described below in more detail by reference to the Examples, but the present invention is not limited to the Examples.

### Test of feed materials

Example 28 Virgin pulp for base board for corrugated fiberboard (cellulose-rich)
Example 29 Virgin pulp for base board for corrugated fiberboard + aluminium sulfate
Example 30 Virgin pulp for base board for corrugated fiberboard + paper force reinforcing agent
Example 31 Virgin pulp for base board for corrugated fiberboard + aluminium sulfate + paper force reinforcing agent
Example 32 Mechanical pulp (almost the same as wood component)
Example 33 Mechanical pulp + aluminium sulfate
Example 34 Mechanical pulp + paper force reinforcing agent
Example 35 Mechanical pulp + aluminium sulfate + paper force reinforcing agent
Comparative Example 7 Pine sapwood (the butt end of 1 cm x 1 cm and length of 2 cm)
Comparative Example 8 Pine sawdust

The feed materials according to the Examples and Comparative Examples were regulated to the size of 2 cm x 2 cm, and were arranged on a glass laboratory dish having a diameter of 30 cm over which silica sand having a moisture content of 10% was spread. They were arranged in the form of a ring so that space was left in the center portion and their orders were random. Then, 1000 ergates and 100 dinergates of Coptotermes formosanus were thrown into the glass laboratory dish from the center portion thereof and the test unit was observed in a thermostatic chamber of a temperature of 28 ± 2 °C and a humidity of 70% or more for one month. Two formicaries whose colonies were different were used.

### Test results

The feed materials of Examples 30 and 31 swarmed with the most ants of Coptotermes formosanus. The feed materials of Examples 34 and 35 swarmed with many but less ants than those of Examples 30 and 31. After the majority of the feed materials of Examples 30, 31, 34, and 35 were eaten up, those of the other Examples finally swarmed with the ants. The feed materials of Comparative Examples 7 and 8 swarmed with the ants further later.

### Bait kit test 1

The containers shown in Fig. 3 (11 mm thick x 60 mm high) were produced, in which the pulps of a type of a virgin pulp for base board for corrugated fiberboard + a paper force reinforcing agent was set. The pulps were treated with lufenuron of IGR in the ratio of 250, 500, 1000, and 2000 ppm to the pulp weight. And the pulp which was not treated with lufenuron was also set. The container having an opening on the top thereof and the container having no opening on the top thereof were prepared for the pulp which was not treated with lufenuron.

A brick whose size was 8 cm high x 5 cm broad x 10 cm long was prepared and was arranged on a glass laboratory dish having a diameter of 20 cm over which silica sand having a moisture content of 10% was spread. Another brick which was surrounded by each of the above containers was set on the above brick, and a pine sapwood which was not treated was arranged further thereon.

3000 ergates and 300 dinergates of Coptotermes formosanus were thrown onto the silica sand in the glass laboratory dish which was set as described above, and the test unit was observed in a thermostatic chamber of a temperature of 28 ± 2 °C and a humidity of 70% or more till 3 weeks later.

### Test results

In the cases of the test pieces of the type in which the virgin pulp for base board for corrugated fiberboard treated with lufenuron was set, the deaths of all the ants of Coptotermes formosanus were ascertained by 3 weeks later.

In the container having no opening on the top thereof in which the pulp not treated with lufenuron was set, the feed material in the container was eaten, but the pine sapwood on the brick was not damaged.

On the other hand, in the container having an opening on the top thereof in which the pulp not treated with lufenuron was set, the feed material in the container was eaten, and the pine sapwood on the brick was also damaged.

From the above test results, it was ascertained that the feed material not treated with medicine and the container also have an effect of inhibiting noxious insects from creeping up.

The damage degrees of the virgin pulps treated with lufenuron are shown below.

| Lufenuron density | Damage degree |
|---|---|
| 250 ppm | Medium |
| 500 ppm | Small |
| 1000 ppm | Small |
| 2000 ppm | Eating marks (marks made by eating just a little) |

### Bait kit test 2

The containers shown in Fig. 3 (11 mm thick x 60 mm high) were produced, in which the pulps of a type of a virgin pulp for base board for corrugated fiberboard + a paper force reinforcing agent were set. The pulps were treated with boric acid in the ratio of 1%, 3%, and 5% to the pulp weight.

A brick whose size was 8 cm high x 5 cm broad x 10 cm long was prepared and was arranged on a glass laboratory dish having a diameter of 20 cm over which silica sand having a moisture content of 10% was spread. Another brick which was surrounded by each of the above containers was set on the brick, and a pine sapwood not treated was arranged further thereon.

3000 ergates and 300 dinergates of Coptotermes formosanus were thrown onto the silica sand in the glass laboratory dish which was set as described above, and the test unit was observed in a thermostatic chamber of a temperature of 28 ± 2 °C and a humidity of 70% or more till 3 weeks later.

### Test results

In the cases of the test pieces of the type in which the virgin pulp for base board for corrugated fiberboard treated with boric acid was set, the deaths of all the ants of Coptotermes formosanus were ascertained by 3 weeks later, and the pine sapwood on the brick was not damaged.

The damage degrees of the virgin pulps treated with boric acid are shown below.

| Boric acid density | Damage degree |
|---|---|
| 1% | Small |
| 3% | Small |
| 5% | Small |

### Industrial Aplicability

The wood preservative, fungicide and insect repellent system and bait kit according to the present invention are effective as a control agent for wood insect pests such as termites and the wood preservative can be also utilized as a fungicide.

## Claims

1. A wood preservative containing at least one kind of hiba neutral oil, hinoki oil, and parahydroxybenzoate as an active component.

2. A wood preservative according to Claim 1, which contains boric acid and/or boron as an active component.

3. A wood preservative according to Claim 1 or 2, whose target wood insect pests are termites.

4. A fungicide or insect repellent system wherein the soil or wood portions is treated with medicine and a bait agent is arranged between the portions treated with medicine.

5. A fungicide or insect repellent system according to Claim 4, wherein a soil treatment agent, containing at least one kind selected from fatty acid, fatty acid ester, plants containing insect pest control components, and their extracts as an active component, is a liquid medicine.

6. A fungicide and insect repellent system according to Claim 4, wherein a soil treatment agent, containing at least one kind selected from fatty acid, fatty acid ester, plants containing insect pest control components, and their extracts as an active component, is a granule.

7. A fungicide and insect repellent system according to Claim 4, wherein a soil treatment agent, containing at least one kind selected from fatty acid, fatty acid ester, plants containing insect pest control components, and their extracts as an active component, is a microcapsule.

8. A fungicide and insect repellent system according to Claim 4, wherein a wood treatment agent, containing at least one kind selected from fatty acid, fatty acid ester, plants containing insect pest control components, and their extracts as an active component, is a liquid medicine.

9. A fungicide and insect repellent system according to Claim 4, wherein a wood treatment agent, containing boric acid as an active component, is a liquid medicine.

10. A fungicide and insect repellent system according to Claim 9, wherein a wood treatment agent, containing at least one kind selected from fatty acid, fatty acid ester, plants containing insect pest control components, and their extracts as an active component, is a liquid medicine.

11. A fungicide and insect repellent system according to Claim 4, wherein a bait agent contains at least one kind selected from IGR (Insect Growth Regulator), phenylpyrazole, neonicotinoid, and boric acid as an active component.

12. A fungicide and insect repellent system according to Claim 11, wherein a feed material of a bait agent includes pulp.

13. A fungicide and insect repellent system according to Claim 11 or 12, wherein a bait agent can be attached to the foundation concrete portion and/or the floor post footing portion.

14. A fungicide and insect repellent system according to one of Claims 3 to 13, wherein a moisture regulator is arranged under the floor.

15. A bait kit comprising a container holding a feed material and having an opening to be an entrance for noxious insects into the container on the side from which the noxious insects creep up, which is placed on the pathway of the noxious insects indoors.

16. A bait kit according to Claim 15, wherein the feed material includes pulp.

17. A bait kit according to Claim 16, wherein the pulp is a virgin pulp.

18. A bait kit according to one of Clamis 15 to 17, wherein the feed material is treated with a medicine which is not repellent to noxious insects.

19. A bait kit according to Claim 18, wherein the medicine is an IGR (Insect Growth Regulator).

20. A bait kit according to Claim 18, wherein the medicine is boric acid.

21. A bait kit according to Claim 18, wherein the medicine is a phenylpyrazole or neonicotinoid insecticide.

22. A bait kit according to Claim 15, wherein the pathway is the foundation portion and/or the floor post footing portion of a house.

23. A bait kit according to Claim 22, which has an attachment with which the container is attached to the foundation portion and/or the floor post footing portion.
